# EUROPÄISCHE PATENTSCHRIFT

(11) **EP 2 171 425 B1**
(45) Veröffentlichungstag und Bekanntmachung des Hinweises auf die Patenterteilung: **05.08.2015**
(21) Anmeldenummer: 08774334.0
(22) Anmeldetag: 26.06.2008
(51) Int. Cl.: G01Q 60/26, G01Q 70/10

(54) **VORRICHTUNG UND VERFAHREN ZUR UNTERSUCHUNG VON OBERFLÄCHENEIGENSCHAFTEN VERSCHIEDENARTIGER MATERIALIEN**
APPARATUS AND METHOD FOR INVESTIGATING SURFACE PROPERTIES OF DIFFERENT MATERIALS
DISPOSITIF ET PROCÉDÉ D'ÉTUDE DES PROPRIÉTÉS DE SURFACE DE MATÉRIAUX DE TYPES DIFFÉRENTS

(30) Priorität: 27.06.2007 DE 102007031112
(43) Veröffentlichungstag der Anmeldung: 07.04.2010
(73) Patentinhaber: Nano Analytik GmbH, 98693 Illmenau (DE)
(72) Erfinder: RANGELOW, Ivo, W., 34225 Baunatal (DE); IVANOV, Tzvetan, 98693 Ilmenau (DE); VOLLAND, Burkhard, 99085 Erfurt (DE); GOTSZALK, Teodor, PL-52-230 Wroclaw (PL); WOSZCZYNA, Miroslaw, PL-54-236 Wroclaw (PL); MIELCZARSKI, Jerzy, F-54180 Houdemont (FR); SAROV, Yanko, 34125 Kassel (DE)
(74) Vertreter: Kleine, Hubertus
(86) Internationale Anmeldenummer: PCT/EP2008/058151
(87) Internationale Veröffentlichungsnummer: WO 2009/000885

(56) Entgegenhaltungen:
- WO-A-01/75427
- IVO W. RANGELOW ET AL.: "Raster-Sonden-Mikroskopie mit Cantilever-Arrays" TECHNISCHES MESSEN TM. ISSN 0171-8096, Bd. 73, Nr. 9, 2006, Seiten 485-492, XP008096103 DER.OLDENBOURG VERLAG. MUNCHEN. in der Anmeldung erwähnt
- ISHIKAWA M ET AL: "Carbon nanotube as a probe for friction force microscopy" PHYSICA B ELSEVIER NETHERLANDS, Bd. 323, Nr. 1-4, Oktober 2002 (2002-10), Seiten 184-186, XP002494632 ISSN: 0921-4526
- LEI F H ET AL: "Shear force detection by using bimorph cantilever with the enhanced Q factor" JOURNAL OF APPLIED PHYSICS, AMERICAN INSTITUTE OF PHYSICS. NEW YORK, US, Bd. 93, Nr. 4, 15. Februar 2003 (2003-02-15), Seiten 2236-2243, XP012059062 ISSN: 0021-8979
- GE S ET AL: "Shear modulation force microscopy study of near surface glass transition temperatures" PHYSICAL REVIEW LETTERS APS USA, Bd. 85, Nr. 11, 11. September 2000 (2000-09-11), Seiten 2340-2343, XP002494633 ISSN: 0031-9007

## Beschreibung

Die Erfindung betrifft eine Vorrichtung und ein Verfahren zur Untersuchung von Oberflächeneigenschaften verschiedenartiger Materialien mit Hilfe der Raster-Kraft-Mikroskopie (AFM-atomic force microscopy) und unter Anwendung des Shear-Force-Verfahrens (Scherkraftverfahren).

Die Raster-Kraft-Mikroskopie wird verbreitet in der Grundlagen- und industriellen Forschung eingesetzt, in denen höchste Auflösungen bei Normalbedingungen benötigt werden, z.B. Molekularbiologie, Oberflächenphysik, Pharmakologie, Materialwissenschaften, Nanotechnologie. Industriell werden AFMs oft in der Halbleiterindustrie zur Prozesskontrolle eingesetzt, da die kritischen Dimensionen der Halbleiterbauelemente immer kleiner werden (<50nm) und mit herkömmlicher Mikroskopie kaum mehr auflösbar sind. Die zu untersuchende Oberfläche wird dabei mit einer sich unterhalb des freien Endes eines seitlich eingespannten mikromechanischen Biegebalkens (Cantilever) befindlichen, sehr scharfen Messspitze abgescannt.

Im Stand der Technik sind für die Raster-Kraft-Mikroskopie im Wesentlichen drei Verfahren bekannt:
- das Kontakt-Verfahren, bei dem die Messspitze direkt über die Oberfläche einer Probe bewegt wird und die zu untersuchende Oberfläche abgetastet wird,
- das kontaktlose Verfahren, bei dem der Cantilever zum Schwingen in seiner Resonanzfrequenz angeregt wird, so dass die Spitze immer nur kurzzeitig die Oberfläche der Probe berührt, und
- das Shear-Force-Verfahren, bei dem ein mit der Messspitze gekoppeltes System zu einer Schwingung in der Nähe einer Resonanz des Systems angeregt wird. Dabei wird die Messspitze senkrecht zur Probenoberfläche ausgerichtet, so dass das Sondenende horizontal, also parallel zur Probenoberfläche, schwingt. Durch die Wechselwirkung der Messspitze mit der Probe wird die Schwingung gedämpft und die Resonanzfrequenz des Systems verändert, in der Regel erhöht.

Die beiden letzteren Verfahren sind vor allem bei sehr weichen, sich zeitlich ändernden (Bio-)Proben von Vorteil.

Aus der DE 103 07 561 A1 ist für das kontaktlose, aber auch für das Kontakt-Verfahren eine Messanordnung zur kombinierten Abtastung und Untersuchung von mikrotechnischen, elektrische Kontakte aufweisenden Bauelementen mit vereinfachtem Aufbau bekannt, bei der in dem Biegebalken ein piezoresistiver Sensor und ein Heizdraht-Aktuator integriert sind. Mit dieser Lösung kann auf die bisher verwendete teure und empfindliche Laseroptik vollständig verzichtet werden.

Weiterhin werden auch in der Publikation von I. W. Rangelow in "Piezoresistive Scanning Proximity Probes for Nanoscience", Technisches Messen 72 (2005) 2, Seite 103 - 110, derartige Raster-Kraft-Sonden (piezoresitive Cantilever) mit integriertem Bimorph-Aktuator und unterschiedlich funktionalisierten Messspitzen beschrieben.

Aus der Publikation von I. W. Rangelow, T. Ivanov, B. E. Volland, D. Dontsov, Y. Sarov, K. Ivanova, A. Persaud, D. Filenko, N. Nikolov, B. Schmidt, M. Zier, T. Gotszalk, T. Sulzbach in "Raster-Sonden-Mikroskopie mit Cantilever-Arrays", Technisches Messen 73 (2006) 9, Seite 485 - 492, ist die Realisierung von piezoresistiven Cantilever-Arrays bekannt, bei denen mehrere einzelne Cantilever in einem Array angeordnet sind, so dass die topografischen, physikalischen und chemischen Analysen mit höchster Präzision und Stabilität sowie auch mit höchster messtechnischer Flexibilität durchgeführt werden können.

Bei den zuvor beschriebenen, aus dem Stand der Technik bekannten Cantilevern ist die Messspitze nahezu rechtwinklig zur Biegebalkenebene. Unter bestimmten experimentellen Bedingungen entsteht dabei eine unerwünschte Wechselwirkung zwischen dem freien Ende des Cantilevers und der zu untersuchenden Oberfläche, die zu Verfälschungen des Messergebnisses bis hin zu einem Crash der AFM-Messspitze führen können. Außerdem ist auch der Betrieb des AFM erschwert, da die Vorbereitung einer Messung umständlich und aufwendig ist (Heranführen der Messspitze an die zu untersuchende Oberfläche). Dies bedingt einen langsamen AFM-Betrieb. Weiterhin ist der Parallelbetrieb einer Array-Anordnung mit herkömmlichen Cantilevern sehr schwierig zu realisieren. Die Arbeit im Vakuum und bei niedrigen Temperaturen ist mit den im Stand der Technik bekannten Cantilevern erschwert.

Aus der Druckschrift WO 01/75427 A1 ist ein Raster-Kraft-Mikroskop bekannt, bei dem ein eine Messspitze tragender Biegebalken im Wesentlichen senkrecht zur Probenoberfläche orientiert ist. An einer Seitenfläche des Biegebalkens ist in Nähe der Messspitze ein reflektierendes Element so angeordnet, dass die Auslenkung des Biegebalkens über einen auf dieses reflektierende Element gerichteten Laserstrahl detektiert werden kann, wobei der einfallende Laserstrahl im Wesentlichen parallel zum Biegebalken verläuft. Verglichen mit Anordnungen, bei denen ein einfallender Laserstrahl in etwa senkrecht zur Oberfläche eines solchen senkrecht zur Probenoberfläche orientierten Biegebalkens verläuft, ist in dieser Konstellation eine relativ kompakte Anordnung des optischen Systems zur Bestimmung der Auslenkung des Biegebalkens möglich. Abgesehen davon, dass die optische Detektion aufwändig ist, nehmen die benötigten Komponenten, insbesondere der zur Messung der Ablenkung des Laserstrahls üblicherweise eingesetzte Vier-Quadranten-Photodetektor, auch in dieser Anordnung mehr Platz ein, als bei einem parallelen Betrieb in einem Cantilever-Array zur Verfügung stehen würde.

Aufgabe der vorliegenden Erfindung ist es deshalb, diese Nachteile zu überwinden und eine Vorrichtung und ein Verfahren zur Untersuchung von Oberflächeneigenschaften verschiedenartiger Materialien bereitzustellen, mit denen es gelingt, die Raster-Kraft-Mikroskopie mit einem vereinfachten und schnellerem Shear-Force-Verfahren durchzuführen, wobei auch ein paralleler Betrieb mehrerer Cantilever einfach realisierbar und das Übersprechen der Aktuator- und Sensorsignale reduziert werden soll.

Erfindungsgemäß gelingt die Lösung dieser Aufgabe vorrichtungsseitig mit den Merkmalen des ersten Patentanspruches und verfahrenseitig mit den Merkmalen des neunten Patentanspruches. Bevorzugte weitere Ausgestaltungen der erfindungsgemäßen Vorrichtung sind in den Unteransprüchen angegeben.

Die erfindungsgemäße Vorrichtung zeichnet sich dadurch aus, dass ein Cantilever/Biegebalken nahezu rechtwinklig nach unten gerichtet an einen Grundkörper angeformt ist, so dass der Winkel zwischen der zu untersuchenden Oberfläche und dem Cantilever nahezu 90° beträgt. Eine Messspitze bildet dabei eine Verlängerung des unteren Biegebalkenendes und ist damit ebenfalls senkrecht zur zu untersuchenden Oberfläche gerichtet. Der Biegebalken weist einen integrierten Sensor and einen integriert

Aktuator auf, die durch einen Spalt galvanisch getrennt sind. Gemäß einer bevorzugten Ausführungsform umfasst die Vorrichtung mehrere Cantilever die als Array angeordnet sind.

Die erfindungsgemäße Vorrichtung ist somit charakterisiert durch eine senkrechte Ausrichtung eines oder mehrerer selbstaktuierter Cantilever und ihrer Messspitzen zur ProbenOberfläche.

Bei einer bevorzugten Ausführungsform ist die Messspitze als Carbon-Nanotube ausgebildet.

Ein erfindungsgemäßes Cantilever-Array ist durch eine kammartige Anordnung einzelner vorgebogener Cantilever charakterisiert.

Das erfindungsgemäße Verfahren zur Untersuchung von Oberflächeneigenschaften verschiedenartiger Materialien mit der zuvor genanten Vorrichtung ist charakterisiert durch ein schnelles Feed-Back-Signal aufgrund der Regulierung des Abstandes zwischen der Messspitze und der zu untersuchenden Oberfläche mittels der Änderung eines Gleichstromsignals, welches den Bimorph-Aktuator speist. Dadurch muss der Positioniertisch, auf dem sich die zu untersuchende Probe befindet, während der Untersuchung in z-Richtung nicht bewegt werden. Die Abbildungsfunktion des AFM wird durch die Regelung des Abstandes der Cantileverspitze zur Oberfläche erreicht, also mittels Cantileverlängenkontrolle (durch Verbiegung des Cantilevers) und nicht durch die Bewegung des Positioniertisches in z-Richtung.

Die Erfindung wird im Folgenden anhand von Zeichnungen näher erläutert. Es zeigt:
- Fig. 1a: - eine Prinzipdarstellung des Aufbaus einer erfindungsgemäßen Vorrichtung mit einem Cantilever
- Fig. 1b: - eine fotografische Abbildung eines realen Cantilevers
- Fig. 2: - eine prinzipielle Array-Anordnung
- Fig. 3: - eine fotografische Abbildung einer realen Array-Anordnung mit vorgebogenen Cantilevern
- Fig. 4: - eine schematische Darstellung einer Schaltungsanordnung für ein AFM mit Amplitudendetektion
- Fig. 5: - eine schematische Darstellung einer abgewandelten Schaltungsanordnung für ein AFM mit Phasendetektion

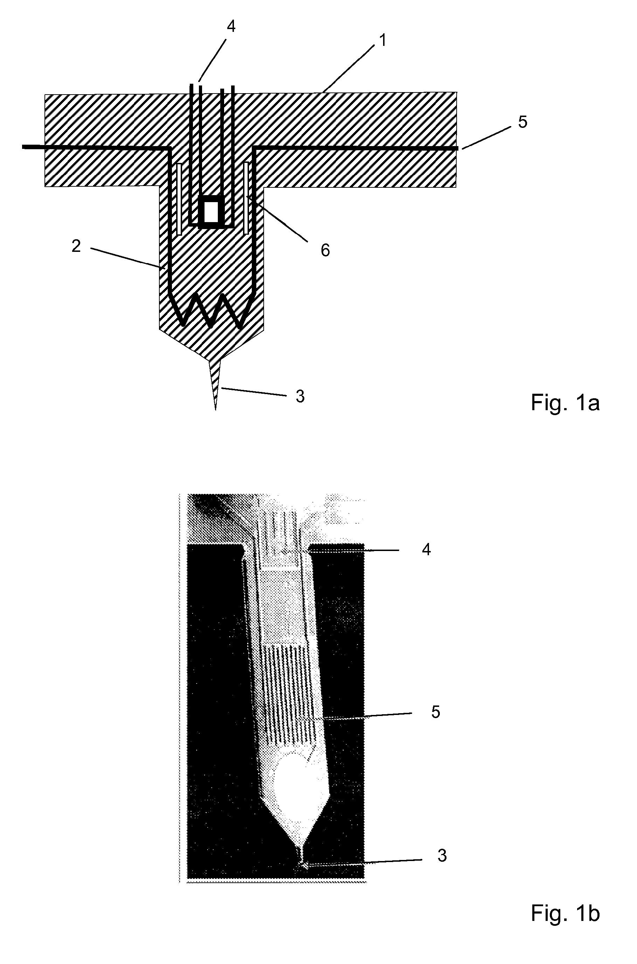

In Fig. 1a ist der Aufbau einer erfindungsgemäßen Vorrichtung zur Untersuchung von Oberflächeneigenschaften prinzipiell dargestellt. Fig. 1b zeigt die Vorrichtung als fotografische Abbildung. Die für den Betrieb der erfindungsgemäßen Vorrichtung erforderlichen Verfahrensschritte ergeben sich ebenfalls aus der nachfolgenden Beschreibung.

An einem Grundkörper 1 ist ein mikromechanischer Federbalken 1 (Cantilever, Biegebalken) angebracht. In diesen Elementen sind ein piezoresistiver Sensor 4 zur Detektion der Auslenkung einer Messspitze 3 und ein thermischer Bimorph-Aktuator 5 zur Anregung einer Federbalkenoszillation integriert. Wenn durch einen Heizdraht des Bimorph-Aktuators 5 ein Wechselstrom fließt, wird eine periodische thermische Welle im Cantilever 2 erzeugt. Diese thermische Welle führt zu einer mechanischen Spannung im Federbalken 2 (Bimorph-Effekt), die in der Folge eine periodische Federbalken- bzw. Messspitzenauslenkung (Resonanzschwingung) hervorruft.

In dem Cantilever ist zur Vermeidung des Übersprechens der Aktuator- und Sensorsignale eine galvanische Trennung 6 in Form eines Luftspalts vorgesehen.

Die Messspitze 3 ist als Carbon-Nanotube ausgebildet. Sie lässt sich auf einfache Art und Weise mit dem unteren Ende des Cantilevers 2 verbinden bzw. dort montieren.

Der Heizdraht des Bimorph-Aktuators 5 wird mit zwei Signalen angesteuert, einem Wechselstrom- und einem Gleichstromsignal. Mit dem Wechselstromsignal werden die Resonanzschwingungen des Federbalkens angeregt. Gleichzeitig, wird mit einem Gleichstromsignal die statische Auslenkung der Messspitze 3 (Verbiegung des Cantilevers) moduliert. Damit gelingt mit der erfindungsgemäßen Vorrichtung auch die Abtastung senkrechter Oberflächen (Stufen und Vertiefungen), wobei eine Bewegung des Positioniertisches, auf dem sich die zu untersuchende Probe befindet, in z-Richtung nicht mehr erforderlich ist.

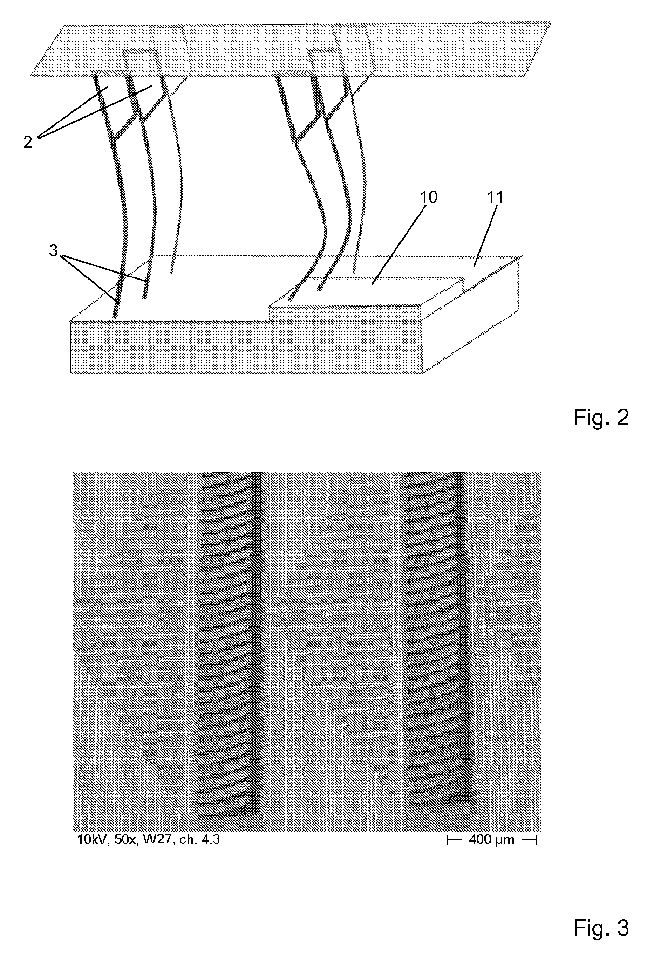

In Fig. 2 ist eine prinzipielle Cantilever-Array-Anordnung aus mehreren erfindungsgemäßen Cantilevern 2 dargestellt. Durch die senkrechte Ausbildung der Cantilever 2 mit den dazugehörigen Messspitzen 3 lässt sich ihre Anordnung in einem Array sehr viel einfacher realisieren. Jeder einzelne Cantilever 2 ist individuell ansteuerbar, so dass Stufen bzw. Vertiefungen 10 in einer zu untersuchenden Oberfläche 11 auch mit einem Cantilever-Array exakt erkannt und abgebildet werden können.

Wie in Fig. 2 dargestellt, sind die einzelnen Cantilever 2 im AFM-Betrieb vorgebogen. Bei einem maximalen Gleichstromsignal ist die Verbiegung des Cantilevers 2 am größten (die effektive Länge des Cantilevers ist am geringsten) und die Messspitze 3 am weitesten von der zu vermessenden Oberfläche 11 beabstandet. Dieser maximale Abstand definiert die maximal zu vermessende Stufenhöhe beim Rastern. Der Cantilever 2 hat seine maximale effektive Länge, wenn kein Gleichstromsignal am Heizdraht anliegt (der Cantilever ist kalt). Um im AFM-Betrieb auch Vertiefungen in der zu vermessenden Oberfläche scannen zu können, sind der bzw. die Cantilever auf einen Wert zwischen ihrer kleinsten und größten effektiven Länge vorgebogen, d.h. es liegt ein Gleichstromsignal am Heizdraht des Bimorph-Aktuators 5 an, welches die effektive Länge des Cantilevers auf einen mittleren Wert einstellt.

In Fig. 3 ist ein Beispiel eines realen Cantilever-Arrays als fotografische Abbildung gezeigt. Die einzelnen Cantilever sind hierbei mit verschiedenen Schutzschichten versehen, die jeweils durch unterschiedliche innere Spannungen (Stress) charakterisiert sind. Dies führt zu einer effektiven Verbiegung der kammartig angeordneten Cantilever. Mit dieser Ausführungsform gelingt eine sehr schnelle, höchstpräzise Untersuchung einer Probenoberfläche.

Das erfindungsgemäße Verfahren zum Betrieb der beschriebenen Vorrichtung zeichnet sich insbesondere dadurch aus, dass die Möglichkeit der internen Anregung der Schwingungen des mikromechanischen Federbalkens 2 bei gleichzeitiger Detektion der Wechselwirkungen zwischen der Messspitze 3 und der zu untersuchenden Oberfläche 11 und der räumlichen Position der Messspitze 3 besteht. Das Verfahren ist weiterhin gekennzeichnet durch ein sehr schnelles, stabiles Feed-Back-Signal, so dass Aufnahmen in Video-Raten-Geschwindigkeit (30 - 50 Bilder pro Sekunde) realisierbar sind. Aufgrund dessen, dass der Abstand der Messspitze 3 zu der zu untersuchenden Oberfläche 11 über die Änderung des dem Heizdraht eingeprägten Gleichstromsignals (zur Verbiegung des Cantilevers 2) reguliert wird, ist eine Bewegung des Positioniertisches, auf dem sich die zu untersuchende Probe befindet, nicht mehr erforderlich.

Bei der Detektion der Wechselwirkungen zwischen der Messspitze und der zu untersuchenden Oberfläche wird zwischen einer Amplituden- und einer Phasendetektion unterschieden.

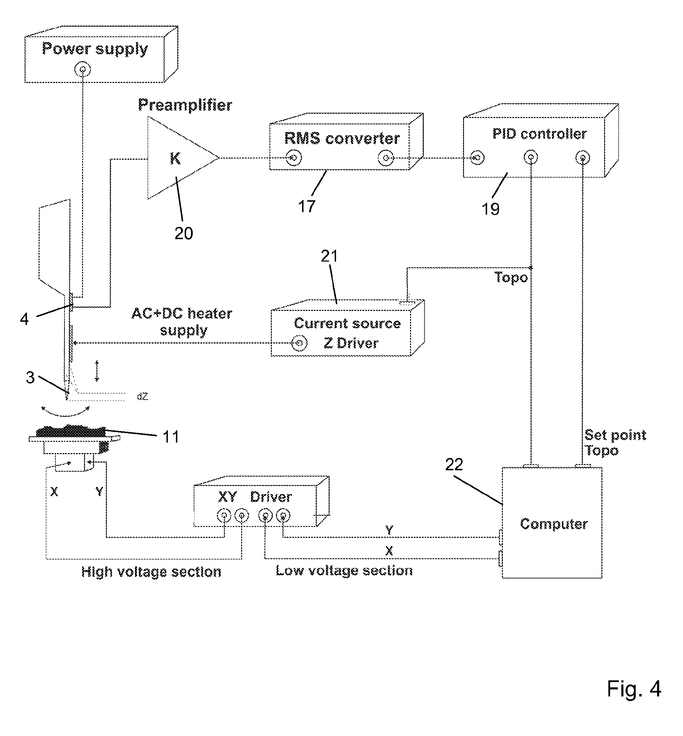

Eine Schaltungsanordnung, mit welcher die Amplitudendetektion gelingt, ist in Fig. 4 gezeigt. Bei der Amplitudendetektion wird die Amplitude der Schwingung des Cantilevers selektiv detektiert, mit Hilfe eines RMS-Wandlers 17 gleichgerichtet und als Eingangssignal für die Regelung des Abstandes zwischen der Messspitze und der zu untersuchenden Oberfläche verwendet, und dazu einem Regler 19 zugeführt.

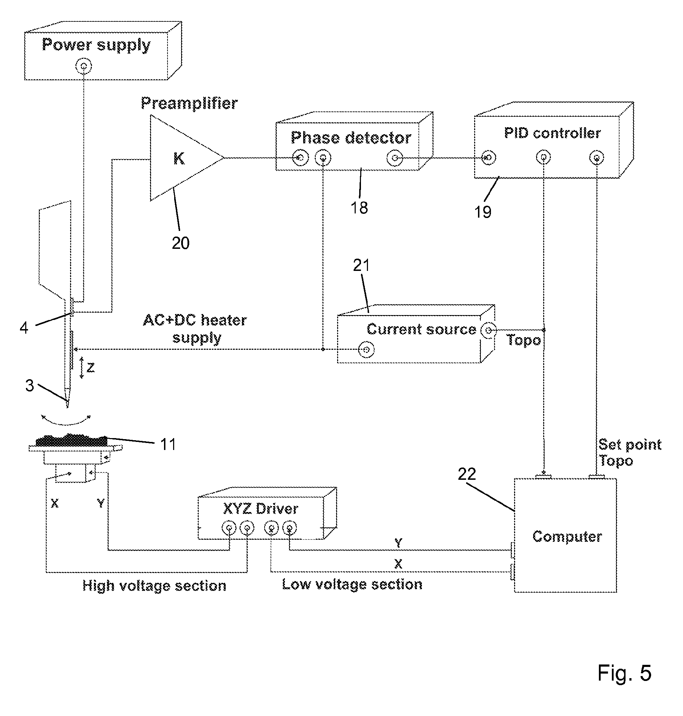

Eine Schaltungsanordnung, mit welcher die Phasendetektion gelingt, ist in Fig. 5 gezeigt. Bei der Phasendetektion wird die Phasendifferenz zwischen dem Ausgangsignal des piezoresistiven Sensors und dem Anregungssignal des Bimorph-Aktuators detektiert. Das Ausgangssignal eines Phasendetektors 18 steuert einen Regler 19 zur Regelung des Abstandes zwischen der Messspitze 3 und der zu untersuchenden Oberfläche 11.

Beide Detektionsverfahren können kombiniert werden. Dadurch kann gleichzeitig die Phasenverschiebung und die Amplitudenänderung beobachtet werden. In allen Messmodi wird das Ausgangsignal des piezoresistiven Sensors 4 mit einem rauscharmen Wechselstromverstärker 20 verstärkt. Das Ausgangssignal des Reglers 19 ist mit einem Stromverstärker 21 (Current source) verbunden, über den die Länge des Cantilevers (Vorverbiegung) reguliert wird.

Eine Steuereinheit 22 des Rasterkraftmikroskops steuert das Rastern der Oberfläche 11, definiert den Sollwert der Steuerung des Abstandes zwischen der Messspitze und der zu untersuchenden Oberfläche und ist für die Messung aller Messsignale verantwortlich.

Mit der erfindungsgemäßen Vorrichtung wird die Architektur des Rasterkraftmikroskopsystems wesentlich vereinfacht, was vielseitige Applikationen in der Raster-Kraft-Mikroskopie im Shear-Force-Verfahren auch in Tieftemperatur- und Vakuumsystemen ermöglicht. Die Detektion der Cantileverschwingungen erfolgt durch die Messung der Ausgangsspannung des piezoresistiven Sensors.

### Bezugszeichenliste

- 1: - Grundkörper
- 2: - mikromechanischer Biegebalken (Cantilever)
- 3: - Messspitze
- 4: - piezoresistiver Sensor
- 5: - thermische Bimorph-Aktuator
- 6: - galvanische Trennung
- 10: - Stufe
- 11: - zu vermessenden Oberfläche
- 17: - RMS-Wandler
- 18: - Phasendetektor
- 19: - Regler
- 20: - Wechselstromverstärker
- 21: - Stromverstärker
- 22: - Steuereinheit

## Patentansprüche

1. Vorrichtung zur Untersuchung von Oberflächeneigenschaften verschiedenartiger Materialien mit Hilfe der RasterKraft-Mikroskopie (AFM - atomic force microscopy) unter Anwendung des Shear-Force-Verfahrens, bestehend aus mindestens einem Grundkörper (1), an dem mindestens ein Biegebalken (Cantilever) (2) angebracht ist, mit einem integrierten Sensor (4), einem integrierten Aktuator (5) zur Auslenkung des Cantilevers (2) quer zu seiner Längsachse, und mindestens einer Messspitze (3), wobei der Biegebalken (2) nahezu rechtwinklig nach unten gerichtet an den Grundkörper (1) angeformt ist, und wobei die Messspitze (3) eine axiale Verlängerung eines unteren Endes des Biegebalkens (2) ist, so dass der Winkel zwischen der zu untersuchenden Oberfläche (11) und dem Biegebalken (2) bzw. der Messspitze (3) im Ruhezustand nahezu 90° beträgt, **dadurch gekennzeichnet, dass** der integrierte Sensor (4) und der integrierte Aktuator (5) durch einen Spalt (6) galvanisch getrennt sind.

2. Vorrichtung nach Anspruch 1 **dadurch gekennzeichnet, dass** der Sensor ein piezoresistiver Sensor (4) ist.

3. Vorrichtung nach Anspruch 1 oder 2, **dadurch gekennzeichnet, dass** der Aktuator ein Bimorph-Aktuator (5) ist.

4. Vorrichtung nach Anspruch 3, **dadurch gekennzeichnet, dass** der Aktuator ein thermischer Bimorph-Aktuator (5) ist, der einen Heizdraht umfasst, welcher zur Einstellung einer Grundposition der Messspitze mit einem Gleichstrom versorgt wird.

5. Vorrichtung nach einem der Ansprüche 1 bis 4, **dadurch gekennzeichnet, dass** der Biegebalken (2) um einen Winkel von +/-45° zur Senkrechten vorgebogen ist.

6. Vorrichtung nach einem der Ansprüche 1 bis 5 **dadurch gekennzeichnet, dass** die Messspitze (3) ein Carbon-Nanotube ist.

7. Vorrichtung nach einem der Ansprüche 1 bis 6, **dadurch gekennzeichnet, dass** mehrere Biegebalken in einem Cantilever-Array angeordnet sind, wobei jeder Biegebalken (2) einen einzeln ansteuerbaren Aktuator (5) und einen einzeln auslesbaren Sensor (4) besitzt.

8. Verfahren zur Untersuchung von Oberflächeneigenschaften verschiedenartiger Materialien mit Hilfe der RasterKraft-Mikroskopie (AFM - atomic force microscopy) unter Anwendung des Shear-Force-Verfahrens, **dadurch gekennzeichnet, dass** das Verfahren mit einer Vorrichtung nach einem der Ansprüche 1 bis 7 ausgeführt wird und dass das die Schwingungsamplitude des oder der Biegebalken (2) und/oder die Schwingungsphasenänderung des detektierten Signals mit dem Sensor (4) erfasst wird und über einen RMS-Wandler (17) und einen PID-Controller (18) zur Abbildung der zu untersuchenden Oberfläche sowie zur Regelung des Abstandes zwischen der Messspitze (3) und der zu untersuchenden Oberfläche (11) in z-Richtung dient.

9. Verfahren nach Anspruch 8, **dadurch gekennzeichnet, dass** der integrierte Aktuator (5) der Vorrichtung mit einem Gleichstrom beaufschlagt wird, um den Abstand zwischen der Messspitze (3) und der zu untersuchenden Oberfläche (11) voreinzustellen.

## Claims

1. Device for examining surface properties of heterogeneous materials with the aid of atomic force microscopy (AFM) by applying the shear force method, comprising at least one base body (1) on which there is mounted at least one bending beam (cantilever) (2) with an integrated sensor (4), an integrated actuator (5) for deflecting the cantilever (2) transverse to its longitudinal axis, and at least one measurement probe (3), the bending beam (2) being integrally moulded on the base body (1) in a fashion directed downward almost at right angles, and the measurement probe (3) being an axial extension of a lower end of the bending beam (2) so that the angle between the surface (11) to be examined and the bending beam (2) or the measurement probe (3) is almost 90° in the state of rest, **characterized in that** the integrated sensor (4) and the integrated actuator (5) are metallically separated by a gap (6).

2. Device according to Claim 1, **characterized in that** the sensor is a piezoresistive sensor (4).

3. Device according to Claim 1 or 2, **characterized in that** the actuator is a bimorph actuator (5).

4. Device according to Claim 3, **characterized in that** the actuator is a thermal bimorph actuator (5) which comprises a heating wire which is provided in order to set a home position of the measurement probe with the aid of a direct current.

5. Device according to one of Claims 1 to 4, **characterized in that** the bending beam (2) is pre-bent by an angle of +/-45° to the vertical.

6. Device according to one of Claims 1 to 5, **characterized in that** the measurement probe (3) is a carbon nanotube.

7. Device according to one of Claims 1 to 6, **characterized in that** a plurality of bending beams are arranged in a cantilever array, each bending beam (2) having an individually controllable actuator (5) and a separately readable sensor (4).

8. Method for examining surface properties of heterogeneous materials with the aid of atomic force microscopy (AFM) by applying the shear force method, **characterized in that** the method is executed with the aid of a device according to one of Claims 1 to 7, and **in that** the oscillation amplitude of the bending beam or bending beams (2), and/or the oscillation phase change in the detected signal are/is acquired by the sensor (4) and used via an RMS converter (17) and a PID controller (18) to image the surface to be examined, and to regulate the distance between the measurement probe (3) and the surface (11) to be examined in the z-direction.

9. Method according to Claim 8, **characterized in that** a direct current is applied to the integrated actuator (5) of the device in order to preset the distance between the measurement probe (3) and the surface (11) to be examined.

## Revendications

1. Dispositif d'analyse de propriétés surfaciques de matériaux de types différents par microscopie à force atomique (AFM-atomic force microscopy) en utilisant le procédé de force de cisaillement, constitué d'au moins un corps de base (1) sur lequel est montée au moins une poutre de flexion (cantilever) (2), avec un capteur (4) intégré, un actionneur (5) intégré pour fléchir le cantilever (2) transversalement à son axe longitudinal et au moins une pointe de mesure (3), la poutre de flexion (2) s'étendant essentiellement perpendiculairement et étant orientée vers le bas sur le corps de base (1) et la pointe de mesure (3) étant un prolongement axial de l'extrémité inférieure de la poutre de flexion (2) de sorte que l'angle entre la surface (11) à analyser et la poutre de flexion (2) ou la pointe de mesure (3) soit égal à environ 90° au repos,
**caractérisé en ce que**
le capteur intégré (4) et l'actionneur intégré (5) sont séparés galvaniquement par une fente (6).

2. Procédé conforme à la revendication 1,
**caractérisé en ce que**
le capteur est un capteur piézo-résistant (4).

3. Dispositif conforme à la revendication 1 ou 2,
**caractérisé en ce que**
l'actionneur est un actionneur bimorphe (5).

4. Dispositif conforme à la revendication 3,
**caractérisé en ce que**
l'actionneur est un actionneur bimorphe thermique (5) renfermant un fil chauffant qui permet le réglage de la position de base de la pointe de mesure à l'aide d'un courant continu.

5. Dispositif conforme à l'une des revendications 1 à 4,
**caractérisé en ce que**
la poutre de flexion (2) est préalablement fléchie d'un angle de +/-45° par rapport à la verticale.

6. Dispositif conforme à l'une des revendications 1 à 5,
**caractérisé en ce que**
la pointe de mesure (3) est un nanotube en carbone.

7. Dispositif conforme à l'une des revendications 1 à 6,
**caractérisé en ce que**
plusieurs poutres de flexion sont montées selon un réseau de cantilever, chacune des ces poutres de flexion (2) comportant un actionneur (5) commandable indépendamment et un capteur (4) lisible indépendamment.

8. Procédé d'analyse de propriétés surfaciques de matériaux de types différents par microscopie à force atomique (AFM-atomic force microscopy) en utilisant le procédé de force de cisaillement,
**caractérisé en ce que**
le procédé est mis en oeuvre en utilisant un dispositif conforme à l'une des revendications 1 à 7 et l'amplitude d'oscillation de la ou des poutre(s) de flexion (2) et/ou les variations de phase d'oscillations du signal détecté avec le capteur (4) est(sont) détectée(s), et sert(servent), par l'intermédiaire d'un convertisseur RMS (17) et d'un régulateur PID (18) à représenter la surface à analyser et à régler la distance entre la pointe de mesure (3) et la surface (11) à analyser dans la direction (Z).

9. Procédé conforme à la revendication 8,
**caractérisé en ce que**
l'actionneur intégré (5) du dispositif est alimenté avec un courant continu pour prérégler la distance entre la pointe de mesure (3) et la surface (11) à analyser.
